(19) Europäisches Patentamt
European Patent Office
Office européen des brevets

(11) Publication number: **0 152 647**
**B1**

# (12) EUROPEAN PATENT SPECIFICATION

(45) Date of publication of patent specification: **09.09.87**

(51) Int. Cl.[4]: **B 01 D 53/14,** B 01 D 53/34, C 01 B 17/05

(21) Application number: **84201822.8**

(22) Date of filing: **10.12.84**

## (54) Process for the removal of H2S from a sour H2S-containing gaseous stream.

(30) Priority: **20.12.83 US 563476**
**20.12.83 US 563477**

(43) Date of publication of application:
**28.08.85 Bulletin 85/35**

(45) Publication of the grant of the patent:
**09.09.87 Bulletin 87/37**

(84) Designated Contracting States:
**DE FR GB IT NL**

(56) References cited:
**EP-A-0 066 310**
**US-A-3 933 993**
**US-A-4 009 251**
**US-A-4 421 733**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Diaz, Zaida**
**11606 Village Place**
**Houston Texas 77077 (US)**

(74) Representative: **Aalbers, Onno et al**
**P.O. Box 302**
**NL-2501 CH The Hague (NL)**

**EP 0 152 647 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for the removal of $H_2S$ from a sour $H_2S$-containing gaseous stream.

The presence of significant quantities of $H_2S$ and $CO_2$ in various "sour" industrial gaseous streams poses a persistent problem. Although various procedures have been developed to remove and recover these contaminants, most such processes are deficient, for a variety of reasons.

One cyclic method for the removal of $H_2S$ from a sour $H_2S$-containing gaseous stream currently attracting attention, comprises:

(a) contacting the sour gaseous stream in a contacting zone with an aqueous reaction solution at a temperature below the melting point of sulphur, the solution comprising an oxidizing polyvalent metal chelate, and producing a purified gaseous stream and an aqueous solution containing crystalline sulphur and reduced polyvalent metal chelate;

(b) removing crystalline sulphur from the aqueous solution and regenerating latter solution in a regenerating zone to produce a regenerated solution containing oxidizing polyvalent metal chelate; and

(c) returning the regenerated solution to the contacting zone.

Suitable reactant materials include polyvalent metallic ions, such as iron, vanadium, copper, manganese, and nickel, and include polyvalent metal chelates. Preferred reactants are coordination complexes in which the polyvalent metals form chelates with specified organic acids.

A problem associated with such processes is that the solid sulphur produced, if special measures are not taken, may be of poor quality, i.e., it may be finely divided and difficult to separate from the aqueous reactant solution. The invention seeks to overcome this problem.

To this end the process for the removal of $H_2S$ from a sour $H_2S$-containing gaseous stream according to the invention is characterized in that the aqueous reaction solution further comprises both phosphate and thiosulphate ions or precursors thereof.

The sulphur crystals removed from the aqueous solution, due to the presence of the combination of phosphate and thiosulphate ions, are of improved quality, i.e., they have increased size, and, thus, improved filterability.

Reference is made to USA patent specification No. 4 009 251, disclosing a process for removing $H_2S$ from a sour $H_2S$-containing gas using an aqueous reaction solution containing iron, trisodium N-hydroxy ethyl ethylene diamine triacetic acid, and sodium thiosulphate to inhibit the oxidation of $H_2S$ beyond sulphur to $SO_2$. In addition, reference is made to USA patent specification No. 3 933 993, disclosing a process for removing $H_2S$ from a sour $H_2S$-containing gas using an aqueous reaction solution containing iron, ethylene diamine tetraacetic acid and a buffering agent in the form of potassium phosphate to adjust the pH of the aqueous reaction solution. None of the publications is relevant to the present invention because it is not disclosed that adding thiosulphate ions or phosphate ions to the aqueous reaction solution improves the quality of the sulphur crystals removed from the aqueous solution, nor is it disclosed that adding both thiosulphate and phosphate ions to the aqueous solution further improves the quality of the sulphur crystals.

The reduced polyvalent metal chelate is regenerated, preferably by contacting the aqueous solution in a regeneration zone with oxygen. The term "oxygen", as used herein, includes oxygen-containing gases, such as air or air-enriched with oxygen. The oxygen oxidizes the reduced metal ions of the chelate to the higher valence state, and the regenerated mixture is returned to the contact zone. Electrochemical regeneration may also be employed.

A sour gaseous stream containing $H_2S$ and $CO_2$ can be subjected to the process according to the invention, too. Broadly, this is accomplished by the use of an absorbent mixture containing an absorbent for $CO_2$ (and preferably for $H_2S$, as well), an effective amount of a polyvalent metal chelate and an amount of the ions described. A purified or "sweet" gaseous stream is produced which meets general industrial and commercial $H_2S$ and $CO_2$ specifications. The $CO_2$ is absorbed and the $H_2S$ is immediately converted to sulphur by the polyvalent metal chelate. In the process, the polyvalent metal chelate is reduced, and the sulphur may be treated, as described, supra. As in the previous embodiment, the sulphur crystals may be removed prior to or subsequent to regeneration of the aqueous solution, and the crystals produced will be of increased size. Preferably, if the volume of $CO_2$ absorbed is large, the reduced chelate-containing solution is treated, such as by heating or pressure reduction, to remove the bulk of the $CO_2$ before regeneration of the reactant (either prior or subsequent to sulphur removal). Alternately, or if small quantities of $CO_2$ are absorbed, the $CO_2$ may simply be stripped in the regeneration zone.

Preferably, the loaded absorbent mixture and the reduced polyvalent metal chelate are regenerated by contacting the mixture in a regeneration zone or zones with an oxygen-containing gas. The oxygen-containing gas may be air, oxygen, or air-enriched with oxygen. The oxygen-containing gas accomplishes two functions, the stripping of the $CO_2$ from the loaded absorbent mixture, and the oxidation of the reduced reactant to a higher oxidation state. The oxygen (in whatever form supplied) is supplied in a stoichiometric equivalent or excess with respect to the amount of reactant present in the mixture. Preferably, the oxygen-containing gas is supplied in an amount of from about 1.2 to 3 times excess.

Good mixing of the gaseous stream and reaction solution in the contact zone may be provided by conventional apparatus currently available,

such as tray type units, in-line mixers (as quick liquid and gas velocities) and stirred or agitated vessels. Poor or inefficient contacting will negate the results of the invention, in some instances, if contacting is quite inefficient, producing sulphur of inferior quality.

The particular type of sour gaseous stream treated is not critical, as will be evident to those skilled in the art. Streams particularly suited to removal of $H_2S$ and $CO_2$ by the practice of the invention are, as indicated, naturally occurring gases, synthesis gases, process gases, and fuel gases produced by gasification procedures, e.g., gases produced by the gasification of coal, petroleum, shale, tar sands, etc. Particularly preferred are coal gasification streams, natural gas streams and refinery feedstocks composed of gaseous hydrocarbon streams, especially those streams of this type having a low ratio of $H_2S$ to $CO_2$, and other gaseous hydrocarbon streams. The term "hydrocarbon streams", as employed herein, is intended to include streams containing significant quantities of hydrocarbon (both paraffinic and aromatic), it being recognized that such streams contain significant "impurities" not technically defined as hydrocarbon. Again, streams containing principally a single hydrocarbon e.g. ethane, are eminently suited to the practice of the invention. Streams derived from the gasification and/or partial oxidation of gaseous or liquid hydrocarbon may be treated by the invention. The $H_2S$ content of the type of streams contemplated will vary extensively, but, in general, will range from about 0.1 per cent to about 10 per cent by volume. $CO_2$ content may also vary, and may range from about 0.5 per cent to over 99 per cent by volume. Obviously, the amounts of $H_2S$ and $CO_2$ present are not generally a limiting factor in the practice of the invention.

The temperatures employed in the contacting or absorption-contact zone are not generally critical, except that the reaction is carried out at a temperature below the melting point of sulphur, and, if an absorbent is used, they must permit acceptable absorption of $CO_2$. In many commercial applications, such as the removal of $H_2S$ and $CO_2$ from natural gas to meet pipeline specifications, contacting at ambient temperatures is desired, since the cost of refrigeration would exceed the benefits obtained due to increased absorption at the lower temperature. In general, temperatures of from 10°C to 80°C are suitable, and temperatures from 20°C to 45°C are preferred. Contact times may range from about 1 second to about 270 seconds or longer, with contact times of 2 seconds to 120 seconds being preferred.

Similarly, in the regeneration or stripping zone or zones, temperatures may be varied widely. Preferably, the regeneration zone should be maintained at substantially the same temperature as the absorption zone. If heat is added to assist regeneration, cooling of the absorbent mixture is required before return of the absorbent mixture to the absorption zone. In general, temperatures of from about 10°C to 80°C, preferably 20°C to 45°C may be employed.

Pressure conditions in the contacting zone may vary widely, depending on the pressure of the gas to be treated. For example, pressures in the contacting zone may vary from one bar up to two hundred bar. Pressures of from one bar to about one hundred bar are preferred. In the regeneration zone or zones, pressures may be varied considerably, and will preferably range from about 0.5 bar to about three or four bar. The pressure-temperature relationships involved are well understood by those skilled in the art, and need not be detailed herein. Preferably the pH in the process according to the invention ranges from 6 to 7.5. The procedure is preferably conducted continuously.

As indicated, the $H_2S$, when contacted, is quickly converted by a solution of the polyvalent metal chelate to elemental sulphur. The amount of chelate compound supplied is an effective amount, i.e., an amount sufficient to convert all or substantially all of the $H_2S$ in the gas stream, and will generally be on the order of at least about two mols per mol of $H_2S$. Ratios of from about 1 mol to about 15 mols of chelate per mol of $H_2S$ may be used, with ratios of from about 2 mols per mol to about 5 mols of chelate per mol of $H_2S$ being preferred. The manner of preparing the aqueous solution containing an absorbent is a matter of choice. For example, the chelate may be added to the absorbent, and, if necessary, then water added. The amount of water added will normally be just that amount necessary to achieve solution of the chelate, and can be determined by routine experimentation. Since the chelate may have a significant solubility in the solvent, and since water is produced by the reaction of the $H_2S$ and the chelate, precise amounts of water to be added cannot be given. In the case of absorbents having a low solubility for the chelate, approximately 5 per cent to 10 per cent water by volume, based on the total volume of the absorbent mixture, will generally provide solvency. Preferably, however, the chelate is added as an aqueous solution to the liquid absorbent. Where the chelate is supplied as an aqueous solution, the amount of solution supplied may be about 20 per cent to about 80 per cent by volume of the total absorbent admixture supplied to the contacting zone. The chelate solution will suitably be employed as an aqueous solution having a concentration of from 0.01 molar to 3 molar, preferably a concentration of 0.1 to 3.0 molar, a concentration of about 1.0 molar being in particular preferred.

Any oxidizing polyvalent metal chelate, or mixtures thereof, may be used, but those of iron, copper, and manganese are preferred, particularly iron. The polyvalent metal should be capable of oxidizing hydrogen sulphide, while being reduced itself from a higher to a lower valence state, and should then be oxidizable from the lower valence state to the higher valence state in

a typical redox reaction. Other polyvalent metals which can be used include lead, mercury, palladium, platinum, tungsten, nickel, chromium, cobalt, vanadium, titanium, tantalum, zirconium, molybdenum, and tin.

The absorbents employed in this invention are those absorbents which have a high degree of selectivity in absorbing $CO_2$ (and preferably $H_2S$ as well) from the gaseous streams. Any of the known absorbents conventionally used which do not affect the activity of the reactant and which exhibit sufficient solubility for the reactant or reactants may be employed. As indicated, the absorbent preferably has good absorbency for $H_2S$ as well, in order to assist in the removal of any $H_2S$ present in the sour gaseous stream. The particular absorbent chosen is a matter of choice, given these qualifications, and selection can be made by routine experimentation. For example, diethylene glycol monoethyl ether, propylene carbonate, tetraethylene glycol-dimethyl ether, N-methyl pyrrolidone, sulpholane, methyl isobutyl ketone, 2,4-pentanedione, 2,5-hexanedione, diacetone alcohol, hexyl acetate, cyclohexanone, mesityl oxide, and 4-methyl-4-methoxy-pentone-2 may be used. Suitable temperature and pressure relationships for different $CO_2$-selective absorbents are known, or can be calculated by those skilled in the art.

The phosphate and thiophosphate ions are suitably present in the aqueous reaction solution in a molar ratio of from 0.5 to 3:1.

The solution containing the ions may be prepared in any suitable fashion. Preferably, the polyvalent metal compounds or chelate(s) may be dissolved and the phosphorus-containing material and the thiosulphate, or precursor thereof, may be added. Alternatively, the phosphorus-containing material may be provided in water, and the chelate, etc., may be added.

The phosphate ions and thiosulphate ions, are supplied in an amount effective to improve the quality of the sulphur produced. Within the ratios mentioned the amount to be employed may be determined by experimentation, it being observed that the ions will preferably be present in a range of from about 0.05 to 1.0 moles of phosphate per litre, and from about 0.05 to 1.0 moles of thiosulphate per litre.

Any suitable sources or precursors of phosphate and thiosulphate ions may be employed. Preferred materials are sodium, potassium, and lithium phosphate, polyphosphate, -hydrogen or -dihydrogen phosphates, and mixtures thereof, and sodium, potassium, or lithium thiosulphate, bisulphite, dithionite, or tetrathionite, and mixtures thereof. The term "polyphosphate", as used herein, is understood to include ortho-, and metaphosphate, and mixtures thereof, and the various phosphoric acids may be employed. The ratios of the various components are as provided, supra.

Preferred chelating agents of the oxidizing polyvalent metal chelates are selected from nitrilotriacetic acid and an acid having the formula

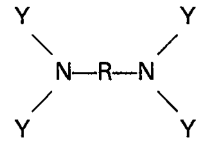

wherein

—from two to four of the groups Y are selected from acetic acid and propionic acid groups;

—from zero to two of the groups Y are selected from 2-hydroxyethyl and 2-hydroxypropyl groups; and

—R represents ethylene, propylene, isopropylene, or cyclohexane or benzene wherein the two hydrogen atoms replaced by nitrogen atoms are in the 1,2-position.

Particular preference is given to oxidizing polyvalent metal chelates which contain nitrolotriacetic acid or N-(2-hydroxyethyl)-ethylenediamine triacetic acid as chelating agent.

When iron is used as the polyvalent metal and nitrilotriacetic acid as the chelating agent the molar ratio of the nitrilotriacetic acid to the iron is preferably from 1.2 to 1.4. The concentration of the iron chelate of nitrilotriacetic acid in the aqueous solutions is preferably from 0.1 to 0.8 moles per litre. The amount of thiosulphate ions is then preferably from 0.05 to 0.5 moles per litre.

The invention also relates to a composition for use in aqueous solutions for removing $H_2S$ from a sour gaseous stream in a process according to the present invention which composition comprises (A) a polyvalent metal chelate, (B) an alkali metal or ammonium phosphate, polyphosphate, hydrogen- or dihydrogen-phosphate and (C) an alkali metal thiosulphate, bisulphite, dithionite or tetrathionite, the molar ratio of (A) to (B) to (C) being 1—6:0.5—3:1.

Preferably, iron is the polyvalent metal and nitrilotriacetic acid is the chelating agent. In case of the iron chelate of nitrilotriacetic acid, the molar ratio of (A) to (B) to (C) is preferably 1—2:0.5—3:1.

The composition may be utilized in preparing the aqueous solution, it being understood that such a composition can simply be added to water. The composition may contain the oxidized or the reduced chelates (or mixtures thereof), those skilled in the art recognizing that the reduced chelate may be employed simply by "regenerating" or oxidizing the solution. If a mixture of the components of the composition of the invention is dissolved in water, the water can be evaporated to dryness by heating and/or reduced pressure leaving the claimed composition as a dry solid. This dry solid redissolves and possesses the same properties as the original claimed composition.

The manner of recovering the sulphur crystals is a matter of choice. For example, the crystals may be recovered by settling, filtration, liquid flotation, or by suitable devices such as a hydroclone, etc.

In order to describe the invention in greater detail, reference is made to the accompanying

schematic drawing. The values given herein relating to temperatures, pressures, compositions, etc., are calculated or merely exemplary and should not be taken as delimiting the invention. Figure 1 illustrates the first embodiment of the invention, wherein sulphur is removed prior to regeneration, while Figure 2 illustrates removal of sulphur after regeneration.

In Figure 1, sour gas, e.g., natural gas containing about 0.5 per cent by volume $H_2S$, in line (1) enters contactor (2) (tray type) into which also enters, from line (12), an aqueous reaction solution comprising e.g. an aqueous 0.3 M solution of the Fe(III) chelate of nitrilotriacetic acid and having a pH of 7 or an aqueous 1.0 M solution of the Fe(III) chelate of N-(2-hydroxyethyl)ethylene diamine triacetic acid having a pH of 6, the solution further containing phosphate ion, added as 0.2 or 0.5 moles per litre of disodium hydrogen phosphate, and thiosulphate ion, added as 0.3 or 0.5 moles per litre of sodium thiosulphate pentahydrate. The pressure of the feed gas is about 84 bar, and the temperature of the aqueous solution is about 35°C. A contact time of about 120 seconds is employed in order to react all the $H_2S$. Purified or "sweet" gas leaves contactor (2) through line (3). The "sweet" gas is of a purity sufficient to meet standard requirements. In the solution, the $H_2S$ is converted to elemental sulphur by the Fe(III) chelate, the Fe(III) chelate in the process being converted to the Fe(II) chelate. The aqueous solution containing elemental sulphur is removed continuously and sent through line (4) to a depressurization and degassing unit (5), and then through line (6) to sulphur recovery unit (7). Sulphur recovery unit (7) may be of any suitable type. Preferably, unit (7) comprises a filtration unit. It is not necessary that all the sulphur be removed in the sulphur recovery step, and some sulphur retention may be beneficial. The type of unit chosen is thus flexible. Preferably, the amount of sulphur removed in the separation step is simply balanced with the rate of sulphur intake in contactor (2), which is of course, dependent on the amount of $H_2S$ in gas stream in line (1). Those skilled in the art may adjust the appropriate rates of withdrawal of the streams. From unit (7), the sulphur-free or substantially sulphur-free solution is sent via line (8) to regeneration zone (9). In regeneration zone (9), the solution is contacted with excess air from line (10) to convert Fe(II) chelate in the solution to the Fe(III) chelate. The temperature of the regeneration column is about 35°C, and pressure in the column is maintained at about 2 bar. Spent air is removed from zone (9) through line (11), while regenerated aqueous solution is returned via line (12) to contactor (2).

As indicated, Figure 1 illustrates the aspect of the invention wherein the sulphur recovery is carried out prior to regeneration. Removal of the sulphur after regeneration may be preferred in some instances, and may be accomplished by positioning of the sulphur recovery unit "after" the regeneration zone. Thus, in a separate embodiment, regenerated liquid, still containing sulphur, may be passed to units analogous or equivalent to unit (7), sulphur recovered, and regenerated sulphur-free solution returned to contactor (2).

Accordingly, in Figure 2, the sulphur-containing solution is passed, after degassing in (5), via line (13) to regenerator (14) where it is regenerated, as previously described. The regenerated sulphur containing solution is removed via line (15), and passed to sulphur recovery unit (16). Spent air is removed via line (17). Regenerated reactant solution is returned via line (18) to contactor (2).

While the invention has been illustrated with particular apparatus, those skilled in the art will appreciate that, except where specified, other equivalent or analogous units may be employed, the term "zones" includes, where suitable, the use of segmented equipment operated in series, or the division of one unit into multiple units because of size constraints, etc. For example, a contacting column might comprise two separate columns in which the solution from the lower portion of the first column would be introduced into the upper portion of the second column, the gaseous material from the upper portion of the first column being fed into the lower portion of the second column. Parallel operation of units, is, of course, well within the scope of the invention.

Again, as will be understood by those skilled in the art, the solutions or mixtures employed may contain other materials or additives for given purposes.

The following experiments illustrate the effect of the additives of the invention. The values given herein relating to temperatures, pressures, compositions, etc., should be considered merely exemplary and not as delimiting the invention.

Experiment 1

$H_2S$ was passed into a contact vessel into which also an aqueous solution containing 1.5 per cent by weight Fe (based on the total weight of the mixture as the Fe(III) chelate of nitrilotriacetic acid (NTA) was introduced. The ligand was supplied in 40 per cent molar excess, basis the iron, and the pH of the system was 7. The pressure of the feed gas was atmospheric and the temperature of the mixture was about 35°C. A contact time of about 120 seconds was employed. Good gas-liquid contact was achieved by stirring the mixture vigorously. In the mixture, the $H_2S$ was converted to elemental sulphur by the Fe(III) chelate, Fe(III) chelate in the process being converted to the Fe(II) chelate. The sulphur produced was very fine and difficult to separate from the solution, and had a mean volume diameter (µm) by Coulter Counter of 5.8.

Experiment 2

A procedure similar to Experiment 1 was followed, except that about 1.3 per cent of Fe as the Fe(III) chelate of nitrilotriacetic acid was used, and the solution also contained 2.6 per cent thiosulphate added as sodium thiosulphate pentahydrate. Both percentages were by weight, based on the total weight of the mixture. The sulphur produced had a mean diameter (µm) by Coulter Counter of 6.8.

Experiment 3

A procedure similar to Experiment 1 was followed, except that about 1.3 per cent of Fe as the Fe(III) chelate of nitrilotriacetic acid was used, and the solution also contained 3.3 per cent phosphate added as an equimolar mixture of disodium hydrogen phosphate and potassium dihydrogen phosphate. Both percentages were by weight, based on the total weight of the mixture. The sulphur produced had a mean diameter (µm) by Coulter Counter of 7.9.

Experiment 4

A procedure similar to Experiment 1 was followed, except that the aqueous solution contained 5.4 per cent by weight Fe (based on the total weight of the mixture) as the Fe(III) chelate of N-(2-hydroxyethyl)ethylenediamine triacetic acid. The ligand was supplied in 10 per cent molar excess, basis the iron, and the pH of the system was 6. The sulphur produced was very fine and difficult to separate from the solution, and had a mean volume diameter (µm) by Coulter Counter of 2.3.

Experiment 5

A procedure similar to Experiment 1 was followed, except that about 1.3 per cent of Fe as the Fe(III) chelate of nitrilotriacetic acid was used, and the solution also contained 3.0 per cent phosphate added as an equimolar mixture of disodium hydrogen phosphate heptahydrate and potassium dihydrogen phosphate, and 2.6 per cent thiosulphate added as sodium thiosulphate pentahydrate. All percentages were by weight, based on the total weight of the mixture. The sulphur produced had a mean diameter (µm) by Coulter Counter of 10.4.

Experiment 6

A procedure similar to Experiment 2 was followed, except that about 4.4 per cent of Fe as the Fe(III) chelate of N-(2-hydroxyethyl)ethylenediamine triacetic acid was used, and the solution also contained 3.4 per cent phosphate, added as disodium hydrogen phosphate heptahydrate, and 4.0 per cent thiosulphate added as sodium thiosulphate pentahydrate (all percentages by weight, based on the total weight of the mixture). The sulphur produced had a mean diameter (µm) by Coulter Counter of 6.9.

From the results of the above experiments it appears that the sulphur obtained in solutions which contained both thiosulphate and phosphate ions has a greater mean diameter and is therefore easier to separate than sulphur obtained in solutions which contained none (cf. Experiments 1 and 4) or only one of the above ions (cf. Experiments 2 and 3).

**Claims**

1. Process for the removal of $H_2S$ from a sour $H_2S$-containing gaseous stream comprising:

(a) contacting the sour gaseous stream in a contacting zone with an aqueous reaction solution at a temperature below the melting point of sulphur, the solution comprising an oxidizing polyvalent metal chelate, and producing a purified gaseous stream and an aqueous solution containing crystalline sulphur and reduced polyvalent metal chelate;

(b) removing crystalline sulphur from the aqueous solution and regenerating latter solution in a regenerating zone to produce a regenerated solution containing oxidizing polyvalent metal chelate; and

(c) returning the regenerated solution to the contacting zone, characterized in that the aqueous reaction solution further comprises both phosphate and thiosulphate ions or precursors thereof.

2. Process according to claim 1, in which phosphate and thiosulphate ions are present in the aqueous reaction solution in a molar ratio of from 0.5 to 3:1.

3. Process according to claim 1 or 2, in which the ions are present in the aqueous reaction solution in an amount of from 0.05 to 1.0 mole of phosphate per litre and from 0.05 to 1.0 moles of thiosulphate per litre.

4. Process according to any one of claims 1—3 in which as polyvalent metal iron is employed.

5. Process according to any one of claims 1—4, in which the chelating agent of the oxidizing polyvalent metal chelate is selected from nitrolotriacetic acid and an acid having the formula:

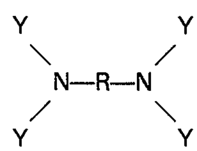

wherein

—from two to four of the groups Y are selected from acetic and propionic acid groups;

—from zero two of the groups Y are selected from 2-hydroxyethyl and 2-hydroxypropyl groups; and

—R represents ethylene, propylene, isopropylene, or cyclohexane or benzene wherein the two hydrogen atoms replaced by nitrogen atoms are in the 1,2-position.

6. Process according to claim 5, in which the oxidizing polyvalent metal chelate contains nitrilotriacetic acid or N-(2-hydroxyethyl)-ethylenediamine triacetic acid as chelating agent.

7. Process according to any one of claims 1—6, in which as precursors for phosphate, polyphosphate, hydrogen phosphate or dihydrogen phosphate and as precursor for thiosulphate bisulphite, dithionite or tetrathionite are used.

8. Process according to any one of claims 1—7, in which the regeneration is carried out by contacting the aqueous solution with an oxygen-containing gas.

9. Composition for use in aqueous solutions for removing $H_2S$ from a sour gaseous stream in a process according to any one of claims 1—8, the composition comprising (A) a polyvalent metal chelate, (B) an alkali metal or ammonium phosphate, polyphosphate, hydrogen- or dihydrogen phosphate and (C) an alkali metal thiosulphate, bisulphite, dithionite or tetrathionite, the molar ratio of (A) to (B) to (C) being 1—6:0.5—3:1.

10. Composition as claimed in claim 9, in which (A) is an iron chelate of nitrilotriacetic acid, the molar ratio of (A) to (B) to (C) being 1—2:0.5—3:1.

**Patentansprüche**

1. Verfahren zum Entfernen von $H_2S$ aus einem sauren $H_2S$-haltigen Gasstrom umfassend die folgenden Verfahrensschritte:

(a) Kontaktieren des sauren Gasstroms in einer Berührungszone mit einer wäßrigen Reaktionslösung bei einer Temperatur unterhalb des Schmelzpunktes von Schwefel, wobei die Lösung ein oxidierendes Chelat eines mehrwertigen Metalls enthält, und Herstellen eines gereinigten Gasstromes und einer wäßrigen Lösung enthaltend kristallinen Schwefel und reduziertes Chelat des mehrwertigen Metalls,

(b) Entfernen des kristallinen Schwefels aus der wäßrigen Lösung und Regenerieren der letzteren Lösung in einer Regenerierungszone zwecks Erhalt einer regenerierten Lösung, enthaltend oxidierendes Chelat des mehrwertigen Metalls und

(c) Rückführen der regenerierten Lösung in die Berührungszone, dadurch gekennzeichnet, daß die wäßrige Reaktionslösung weiterhin sowohl Phosphatals auch Thiosulfationen oder Vorstufen davon enthält.

2. Verfahren gemäß Anspruch 1, in welchem Phosphat- und Thiosulfationen in der wäßrigen Reaktionslösung in einem Molverhältnis von 0,5 bis 3:1 vorliegen.

3. Verfahren gemäß Anspruch 1 oder 2, in welchem die Ionen in der wäßrigen Reaktionslösung in einer Menge von 0,05 bis 1,0 Mol Phosphat je Liter und von 0,05 bis 1,0 Mol Thiosulfat je Liter vorliegen.

4. Verfahren gemäß einem der Ansprüche 1 bis 3, in welchem als mehrwertiges Metall Eisen verwendet wird.

5. Verfahren gemäß einem der Ansprüche 1 bis 4, in welchem der Chelatbildner des oxidierenden mehrwertigen Metalls ausgewählt ist aus Nitrilotriessigsäure und einer Säure der Formel

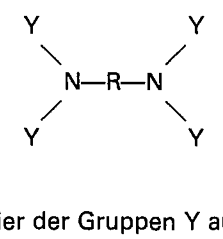

in welcher

—zwei bis vier der Gruppen Y ausgewählt sind aus Essigsäure- und Propionsäuregruppen;

—0 bis zwei der Gruppen Y ausgewählt sind aus 2-Hydroxyäthyl- und 2-Hydroxypropylgruppen; und

—R Äthylen, Propylen, Isopropylen oder Cyclohexan oder Benzol bedeutet, wobei die beiden durch Stickstoffatome ersetzten Wasserstoffatome in der 1,2-Stellung sind.

6. Verfahren gemäß Anspruch 5, in welchem das oxidierende Chelat mehrwertiger Metalle Nitrilotriessigsäure oder N-(2-Hydroxyäthyl)-äthylendiamin-triessigsäure als Chelatbildner enthält.

7. Verfahren gemäß einem der Ansprüche 1 bis 6, in welchem as Vorstufen zu Phosphat Polyphosphat, Hydrogenphosphat oder Dihydrogenphosphat und als Vorstufen zu Thiosulfat Bisulfit, Dithionit oder Tetrathionit verwendet werden.

8. Verfahren gemäß einem der Ansprüche 1 bis 7, in welchem die Regenerierung durch Kontaktieren der wäßrigen Lösung mit einem sauerstoffhaltigen Gas durchgeführt wird.

9. Zusammensetzung zur Verwendung in wäßrigen Lösungen zwecks Entfernung von $H_2S$ aus einem sauren Gasstrom in einem Verfahren gemäß einem der Ansprüche 1 bis 8, wobei die Zusammensetzung (A) ein Chelat eines mehrwertigen Metalls (B) ein Alkalimetall- oder Ammoniumphosphat, -polyphosphat, -hydrogen- oder -dihydrogenphosphat und (C) ein Alkalimetallthiosulfat, -bisulfit, -dithionit oder -tetrathionit enthält, und das Molverhältnis von (A) zu (B) zu (C) 1—6:0,5—3:1 beträgt.

10. Zusammensetzung wie in Anspruch 9 beansprucht, in welcher (A) ein Eisenchelat von Nitrilotriessigsäure ist, wobei das Molverhältnis von (A) zu (B) zu (C) 1—2:0,5—3:1 beträgt.

**Revendications**

1. Procédé d'élimination de $H_2S$ d'un courant gazeux acide contenant du $H_2S$ comprenant:

(a) la mise en contact du courant gazeux acide dans une zone de mise en contact avec une solution réactionnelle aqueuse à une température au-dessous du point de fusion du soufre, la solution comprenant un chélate de métal polyvalent oxydant, et la production d'un courant gazeux purifié et d'une solution aqueuse contenant du soufre cristallin et du chélate de métal polyvalent réduit;

(b) l'élimination du soufre cristallin de la solution aqueuse et la régénération de cette dernière solution dans une zone de régénération de manière à produire une solution régénérée contenant du chélate de métal polyvalent oxydant; et

(c) le retour de la solution régénérée à la zone de mise en contact, caractérisé en ce que la solution réactionnelle aqueuse comprend en outre à la fois des ions phosphate et thiosulfate ou leurs progéniteurs.

2. Procédé selon la revendication 1, dans lequel les ions phosphate et thiosulfate sont présents dans la solution réactionnelle aqueuse dans un rapport molaire compris entre 0,5 et 3:1.

3. Procédé selon la revendication 1 ou 2, dans lequel les ions sont présents dans la solution

réactionnelle aqueuse à raison de 0,05 à 1,0 mole de phosphate par litre et de 0,05 à 1,0 mole de thiophosphate par litre.

4. Procédé selon l'une quelconque des revendications 1—3, dans lequel comme métal polyvalent on utilise du fer.

5. Procédé selon l'une quelconque des revendications 1—4, dans lequel l'agent chélateur du chélate de métal polyvalent oxydant est choisi parmi l'acide nitrilotriacétique et un acide ayant la formule:

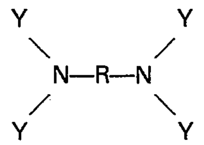

où

—de deux à quatre des groupes Y sont choisis parmi des groupes acide acétique et acide propionique;

—de zéro à deux des groupes Y sont choisis parmi des groupes 2-hydroxyéthyle et 2-hydroxypropyle; et

—R représente de l'éthylène, du propylène, de l'isopropylène ou du cyclohexane ou du benzène, où les deux atomes d'hydrogène remplacés par des atomes d'azote sont dans la position 1,2.

6. Procédé selon la revendication 5, dans lequel le chélate de métal polyvalent oxydant contient de l'acide nitrilotriacétique ou de l'acide N-(2-hydroxyéthyl)-éthylènediamine triacétique comme agent chélateur.

7. Procédé selon l'une quelconque des revendications 1—6, dans lequel comme progéniteurs pour les ions phosphate, on utilise des polyphosphates, hydrogenophosphates, ou dihydrogénophosphates et comme progéniteurs pour les ions thiosulfate ou utilise des bisulfites, dithionites ou tétrathionites.

8. Procédé selon l'une quelconque des revendications 1—7, dans lequel on effectue la régénération par mise en contact de la solution aqueuse avec un gaz contenant de l'oxygène.

9. Composition utilisable dans des solutions aqueuses pour eliminer $H_2S$ d'un courant gazeux acide dans un procédé selon l'une quelconque des revendications 1—8, la composition comprenant (A) un chélate du métal polyvalent, (B) un phosphate, polyphosphate, hydrogéno- ou dihydrogénophosphate de métal alcalin ou d'ammonium et (C) un thiosulfate, bisulfite, dithionite ou tétrathionite de métal alcalin, les rapports molaires de (A):(B):(C) étant de 1—6:0,5—3:1.

10. Composition selon la revendication 9, dans laquelle (A) est un chélate de fer d'acide nitrilotriacétique, les rapports molaires (A):(B):(C) étant de 1—2:0,5—3:1.

Fig.1

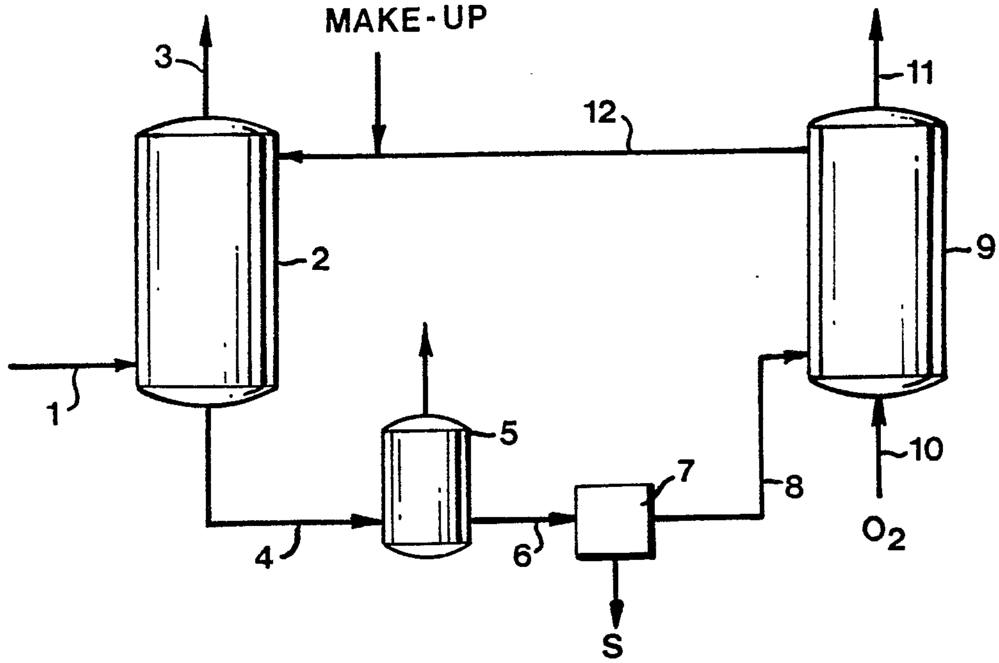
MAKE-UP
3
11
12
2
9
1
5
7
8
10
4
6
$O_2$
S

Fig. 2

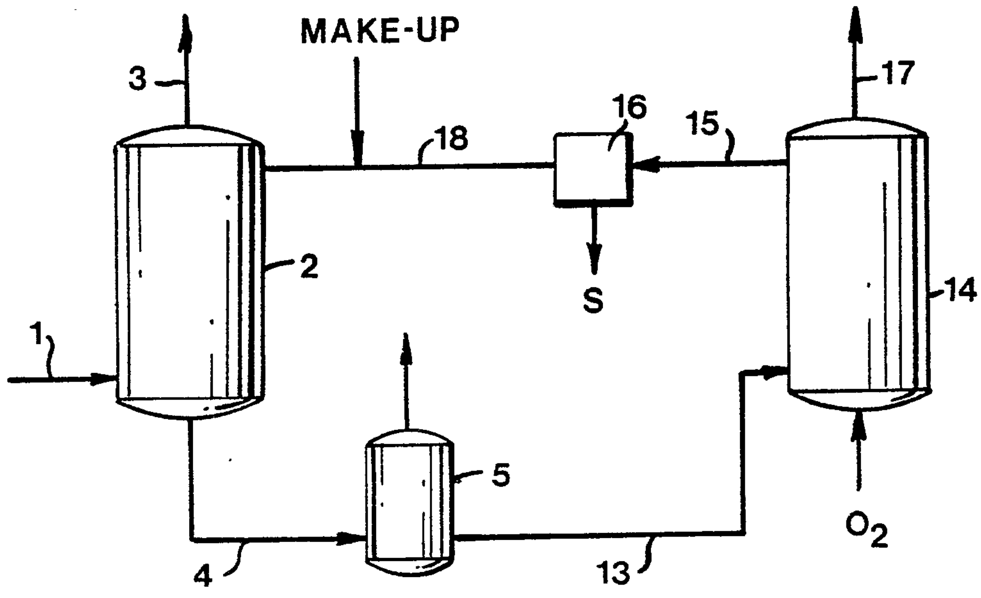
MAKE-UP
3
17
16
15
18
2
S
14
1
5
4
13
$O_2$